# FASCICULE DE BREVET EUROPEEN

(11) **EP 0 448 491 B1**
(45) Date de publication et mention de la délivrance du brevet: **22.05.1996**
(21) Numéro de dépôt: 91460012.7
(22) Date de dépôt: 19.03.1991
(51) Int. Cl.: H04N 7/24

(54) **Procédé de codage et de transmission à au moins deux niveaux de qualité d'images numériques appartenant à une séquence d'images, et dispositifs correspondants**
Verfahren zur Kodierung und Übertragung von digitalen Bildern einer Bildsequenz mit mindestens zwei Qualitätsniveaus und zugehörige Geräte
Method of coding and transmitting digital images of an image sequence with at least two quality levels and corresponding devices

(30) Priorité: 23.03.1990 FR 9003926
(43) Date de publication de la demande: 25.09.1991
(73) Titulaire: FRANCE TELECOM, F-75015 Paris (FR); TELEDIFFUSION DE FRANCE S.A., F-92542 Montrouge Cédex (FR)
(72) Inventeur: Henot, Jean-Pierre, F-35510 Thorigne (FR)
(74) Mandataire: Corlau, Vincent

(56) Documents cités:
- EP-A- 0 072 117
- EP-A- 0 274 861
- EP-A- 0 339 589
- DE-A- 2 835 434
- FR-A- 2 604 316
- US-A- 4 903 125
- IEEE GLOBAL TELECOMMUNICATIONS CONFERENCE & EXHIBITION, Hollywood, Florida, 28 novembre - 1 décembre 1988, vol. 2, pages 743-749; K.-H. TZOU et al. : "Compatible HDTV coding for broadband ISDN"
- OPTICAL ENGINEERING, vol. 26, no. 7, juillet 1987, pages 581-589; K.-H. TZOU: "Progressive image transmission: a review and comparison of techniques"

## Description

Le domaine de l'invention est celui de la transmission d'images dans un canal numérique.

L'invention concerne notamment la transmission de signaux de télévision numériques, par exemple par voie hertzienne, susceptibles d'une part d'être reçus par des mobiles, en particulier dans des conditions de réception difficiles, et d'autre part par des récepteurs fixes, exigeant une qualité d'image élevée.

L'invention s'applique à tout type de transmission d'images, tel que la télévision dite classique, correspondant à un format d'image de l'ordre de 720 par 575 pixels, la télévision haute définition (TVHD) ou la visiophonie.

Du fait de la multiplication des canaux numériques et de leur transparence vis à vis des données transmises, l'utilisation de ces canaux pour la transmission d'images devrait s'accroître de façon importante dans les années à venir.

Toutefois, cette transmission d'images sur des canaux numériques n'est pas triviale. En effet, le débit de transmission des différents canaux existants ne permet pas de transmettre telles quelles des images animées en temps réel. Il est donc nécessaire de comprimer l'information contenue dans ces images, notamment en supprimant les redondances.

On connaît de nombreuses techniques de réduction de débit, ou codage. D'une manière générale, elles comprennent trois étapes :
- une étape de représentation de l'image de la manière la plus compacte possible en utilisant les redondances existant dans l'image ou la séquence d'images;
- une étape de quantification de cette nouvelle représentation ;
- une étape d'attribution à chaque valeur quantifiée d'un mot de code qui sera transmis et permettra au décodeur de reconstruire la suite d'images transmises.

Ces méthodes de codage connues permettent d'obtenir, en général, des débits permettant la transmission d'images de bonne qualité vers les récepteurs fixes. En revanche, les canaux de transmission et les méthodes de codage utilisés ne permettent pas d'assurer de façon fiable la réception dans les mobiles, notamment en milieu urbain, c'est-à-dire dans des conditions de multipropagation (processus de Rayleigh) engendrant des phénomènes d'évanouissement (fading), et en présence de parasites et de brouillage.

La diffusion vers des mobiles nécessite donc l'utilisation de techniques de codage à redondance, et/ou de modulation plus robustes, au détriment du nombre d'informations, donc de la définition de l'image transmise.

On sait d'autre part que le débit des canaux de transmission est fixe, alors que celui des données, suite au codage, est le plus souvent variable. Cela nécessite la présence d'un élément de mémoire-tampon et de moyens de régulation, agissant sur le codage, et par exemple sur les niveaux de quantification, en fonction du taux de remplissage de cette mémoire-tampon.

Cette régulation présente l'inconvénient d'agir sans distinction sur n'importe quel coefficient à transmettre, alors que l'on sait que certains de ces coefficients sont plus importants que d'autres, notamment d'un point de vue psychovisuel. Ainsi, un coefficient de moindre intérêt , vis à vis de l'acuité visuelle, par exemple parce qu'il correspond à une information concernant une fréquence spatiale élevée, pourra être transmis avec une bonne définition de codage, si le tampon-mémoire est peu rempli, alors qu'un coefficient essentiel de la même image, arrivant à un moment où le tampon-mémoire est saturé, sera plus faiblement codé. En d'autres termes, on aura alors codé normalement l'information de faible intérêt, et sous-codé l'information plus pertinente.

L'invention a pour but de pallier ces différents inconvénients.

Plus précisément, un objectif de l'invention est de fournir un procédé de codage et de transmission d'images permettant la réception de séquences d'images numériques d'une part dans des mobiles, et d'autre part dans des récepteurs fixes, avec une qualité d'image satisfaisante pour les écrans de taille importante.

Un objectif complémentaire de l'invention est de fournir un tel procédé utilisant un canal de transmission unique.

Un autre objectif de l'invention est de fournir un tel procédé, dont la régulation agisse de préférence sur les coefficients porteurs d'informations peu pertinentes.

L'invention a également pour objectif de fournir un tel procédé, permettant la réalisation de récepteurs de petite taille à coût réduit.

Un autre objectif de l'invention est de fournir un tel procédé permettant la réalisation de moyens de stockage d'images à au moins deux niveaux de qualité.

Ces objectifs, ainsi que d'autres qui apparaîtront par la suite, sont atteints selon l'invention à l'aide d'un procédé de codage et de transmission à au moins deux niveaux de qualité d'images numériques selon la revendication 1.

Ainsi il est possible de reconstruire des images avec des niveaux de qualité distincts, en fonction des trains binaires que l'on utilise dans les récepteurs.

De façon avantageuse, lesdits coefficients de base du premier train numérique sont transmis avec un niveau de protection vis à vis des erreurs de transmission supérieur à celui utilisé pour les coefficients complémentaires du ou des seconds trains binaires.

Cela permet d'une part de recevoir de façon fiable les données du premier train numérique même dans des conditions difficiles, et notamment dans les mobiles, et d'autre part de transmettre les données complémentaires du second train avec une meilleure efficacité, en terme de débit. Il est clair, en effet que les données essentielles, correspondant au premier train, sont avantageusement traitées avec une qualité et/ou une sécurité accrue.

Préférentiellement, ladite transformation est du type fournissant des coefficients transformés représentatifs chacun d'une structure et d'une valeur de fréquence spatiale dans l'image, ledit premier train numérique comprenant essentiellement un premier jeu de coefficients transformés correspondant aux fréquences spatiales faibles, et ledit second train numérique comprenant un jeu de coefficients transformés complémentaires correspondant aux fréquences spatiales élevées.

Il est clair que par second train numérique, on entend le ou les trains complémentaires, dans le cas où il y en a plusieurs.

Dans un mode de réalisation préférentiel de l'invention, ladite transformation mathématique réversible est une transformation discrète en cosinus.

Avantageusement, lesdits coefficients de chaque bloc transformé sont réordonnés selon un balayage "zigzag" dudit bloc transformé, de façon à ordonner lesdits coefficients selon un critère de fréquence spatiale croissante.

Dans un mode de réalisation particulier de l'invention, chacun desdits trains numériques correspond à un débit prédéterminé.

On code préférentiellement les coefficients de même ordre de l'ensemble des blocs d'une image, avant de coder les coefficients d'ordre supérieur.

Cette caractéristique permet de commencer par coder l'ensemble des éléments importants pour toute l'image, avant de coder les éléments moins pertinents. Ainsi, en cas de problème de débit nécessitant la réduction de la quantité d'informations à transmettre, seuls sont touchés les éléments de moindre importance.

Dans le cas de procédés réalisant une estimation et une compensation de mouvement, lesdites estimation et compensation de mouvement sont réalisées à partir des coefficients du premier train numérique seulement, sans tenir compte des coefficients du ou des trains numériques complémentaires. En effet, seules ces informations sont disponibles dans l'ensemble des récepteurs.

La diffusion des trains numériques se fait avantageusement par multiplexage dans un canal commun, des mots de synchronisation spécifiques permettant aux décodeurs de repérer le début et la fin de chacun desdits trains numériques.

Dans un autre mode de réalisation, le procédé de l'invention assure la répartition des données à diffuser sous forme d'éléments numériques dans l'espace temps-fréquence et l'émission de symboles constitués chacun d'un multiplex de J fréquences porteuses orthogonales modulées par un jeu desdits éléments numériques, et diffusées simultanément, un jeu desdites fréquences porteuses étant attribué à la diffusion de chacun desdits trains numériques, et les fréquences porteuses de chacun desdits jeux étant modulées de façons différentes.

Les dispositifs d'émission selon l'invention comprennent avantageusement deux mémoires-tampon, la première mémoire-tampon contenant les données correspondant audit premier train numérique, et la seconde mémoire-tampon contenant les données correspondant audit second train numérique, le chargement de ladite seconde mémoire-tampon étant effectué lorsque le débit alloué au premier train numérique est atteint.

Dans ce cas particulier de signaux de télévision comprenant une composante de luminance et au moins une composante de chrominance, les dispositifs d'émission peuvent comprendre au moins deux chaînes de traitement réalisant la transformation, la quantification et la séparation des coefficients des blocs transformés en au moins deux trains numériques, fonctionnant en parallèle, chacune desdites chaînes étant associée à une desdites composantes.

Le procédé de l'invention permet de définir au moins deux types de récepteurs, et notamment, d'une part des récepteurs du type récepteur pour mobiles ou récepteur de petite taille, comprenant des moyens de reconstruction d'images de qualité standard, à l'aide des informations transmises par ledit preiriier train numérique seulement, et d'autre part des récepteurs essentiellement fixes, comprenant des moyens de reconstruction d'images de haute qualité, à l'aide des informations transmises par ledit premier train numérique et au moins un train numérique complémentaire.

Ce distinguo peut également être effectué entre différents types de récepteurs mobiles, en fonction de leur taille d'écran, et de leur capacité de traitement, ...

Le procédé de l'invention permet par ailleurs la réalisation de dispositif de stockage à au moins deux niveaux de qualité d'images numériques transmises comprenant des moyens d'inscription sur un support de données d'images numériques sous au moins deux formats, correspondant au train numérique de base seul, et à l'association dudit train numérique de base avec au moins un desdits trains numériques complémentaires, et des moyens de sélection de l'un desdits formats d'inscription.

D'autres caractéristiques et avantages de l'invention apparaîtront à la lecture suivante d'un mode de réalisation préférentiel de l'invention, donné à titre illustratif et non limitatif, et des dessins annexés, dans lesquels :
- la figure 1 est un schéma de principe du procédé de codage de l'invention, dans le cas d'un codage à deux niveaux de qualité ;
- la figure 2 illustre le principe de changement de balayage du procédé de la figure 1 ;
- la figure 3 illustre l'ordre d'émission des coefficients composant une image ;
- la figure 4 illustre le principe de séparation des deux trains binaires du procédé de la figure 1 ;
- la figure 5 est un schéma de principe d'un décodeur simple, utilisant seulement le premier train binaire ;
- la figure 6 est un schéma de principe d'un décodeur complet, utilisant les deux trains binaires.

La transmission d'images sur des canaux numériques nécessite plusieurs étapes. Il faut tout d'abord numériser l'image. Il existe à cet effet des normes au niveau des organismes de radiodiffusion, telle que la recommandation 601 du CCIR. Il est ensuite nécessaire d'adapter le débit résultant de cette numérisation (216 Mbits/s dans le cas de l'image numérique définie dans la recommandation 601 du CCIR) à la capacité du canal. Cette adaptation du débit correspond au codage des images, à l'émetteur, et au décodage, au récepteur.

On connaît de nombreuses techniques de codage. D'une manière générale, le codage, ou réduction de débit, s'obtient en trois étapes. Il est tout d'abord nécessaire de représenter l'image de la manière la plus compacte possible en utilisant les redondances existant dans l'image ou la séquence d'images. Ensuite, il faut quantifier, de manière généralement plus grossière, cette nouvelle représentation de l'image. Enfin, il faut attribuer à chaque valeur quantifiée un mot de code qui sera transmis et permettra au décodeur de reconstruire la suite d'images transmises.

La réduction de débit provient de l'ensemble de ces différentes étapes.

La première étape est réversible, c'est-à-dire que si on effectue l'opération inverse, on retrouve l'information d'origine. Il s'agit par exemple d'une étape de prédiction en codage prédictif (MICD), ou de transformation de l'image en codage par transformation temps-fréquence.

Dans le cas des techniques prédictives, on essaie de prédire pour chaque point à transmettre la valeur de ce point, à partir des points déjà transmis, de façon à ce que le décodeur puisse opérer de manière similaire. On effectue alors la différence entre le point à coder et la valeur prédite. Cette nouvelle valeur est appelée erreur de prédiction. Alors que les valeurs des points de l'image à coder sont sensiblement équiproblables, les valeurs des erreurs de prédiction sont bien moins nombreuses et fortement concentrées autour de la valeur 0. Elles permettent donc un codage moins coûteux, en terme de débit.

En ce qui concerne les techniques de transformation, l'idée de base consiste à prendre une sous-image de l'image complète, et à effectuer sur cette sous-image une transformation mathématique réversible, telles que notamment les transformations de Fourier, Haar ou Hadamard. L'intérêt est que, dans l'espace transformé, l'énergie est répartie sur un nombre beaucoup plus faible de coefficients.

Actuellement, la transformation la plus couramment utilisée est la transformation discrète en cosinus (DCT). Une des raisons de son emploi, en plus de bonnes caractéristiques d'efficacité en terme de compression, est l'existence d'un circuit intégré effectuant le calcul de cette opération en temps réel pour la télévision, à une fréquence d'horloge de 13,5 MHz, sur des bloc de taille 4 par 4 jusqu'à 16 par 16.

On connaît également le codage en sous-bandes, méthode basée sur le découpage en bande de fréquences de l'image d'origine par des bancs de filtres numériques, tels que des filtres miroir. Ce découpage permet d'exploiter le fait que la majeure partie de l'information est contenue dans les bandes de fréquences faibles.

Ces différentes méthodes, ainsi que d'autres, peuvent être combinées. Il est par exemple possible de subdiviser l'image en blocs de 8 points par 8 lignes, puis de réaliser pour chacun des blocs une prédiction temporelle, en fonction des blocs de l'image précédente mis en mémoire, et enfin d'effectuer sur les blocs obtenus par différence temporelle, ou prédiction temporelle, une transformation discrète en cosinus.

Ce type de codage est appelé codage hybride.

La seconde étape, la quantification, est irréversible : une partie de l'information est définitivement perdue, mais de préférence là où sa perte sera le moins visible.

La quantification consiste à attribuer à un ensemble de valeurs dans un certain espace une valeur unique, ou représentant, de façon irréversible, la valeur exacte avant quantification étant alors perdue.

Cette attribution de représentants peut se faire de manière systématique (quantification fixe) ou variable en fonction du contexte local (quantification adaptative).

On distingue principalement deux types de quantification : quantification scalaire, dans un espace à une dimension, et quantification vectorielle, dans un espace à plus d'une dimension. Dans le cas de la quantification scalaire existent les quantifications linéaire, ou uniforme, et non linéaire.

La troisième étape, l'attribution de mots de code aux valeurs quantifiées, est également réversible. Le débit peut être réduit par l'utilisation de codes à longueur variable qui attribuent des mots de code de longueur la plus courte aux événements les plus fréquents. Un exemple de ce type de code est le code de Huffman. Dans ce cas, on attribue aux valeurs qui apparaissent le plus souvent des codes de longueur courte, les valeurs apparaissant moins souvent ayant en contrepartie une longueur de mot code supérieure. En moyenne, mais au prix d'une complexité accrue, le débit est inférieur à celui d'un code à longueur fixe.

Les techniques de codage les plus évoluées et les plus couramment utilisées à l'heure actuelle mettent en oeuvre les techniques de transformation discrète en cosinus, l'estimation et la compensation de mouvement pour la prédiction temporelle, et des codes à longueur variable.

De tels systèmes sont actuellement proposés à la normalisation pour la transmission de la télévision numérique sur des canaux à 34 Mbit/s et pour les systèmes de visioconférence à 384 Kbit/s.

Le système suivant l'invention est notamment compatible avec ces normes.

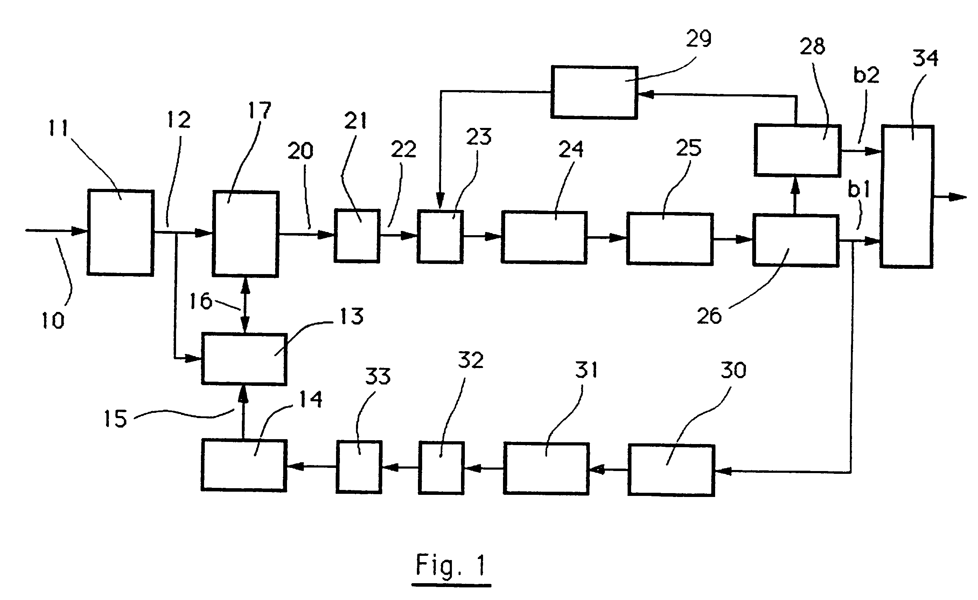

la figure 1 est le schéma de principe du procédé de l'invention, dans un cas particulier comprenant une transformation discrète en cosinus, une compensation de mouvement, et une séparation des coefficients en deux trains numériques complémentaires.

Il est bien clair que l'invention n'est pas limitée à ce procédé, mais couvre tous les procédés de codage mettant en oeuvre une telle séparation des coefficients à transmettre, en deux trains numériques ou plus.

Le signal vidéo 10 numérique à transmettre subit une première étape 11 de mise en blocs 12, à partir de l'analyse de l'image par lignes. Ces blocs 12, dans le mode de réalisation décrit, ont une taille de 8 points par 8 lignes.

Une étape 13 d'estimation du mouvement recherche, à partir des blocs 15 de l'image précédente, stockés dans une mémoire 14, le meilleur correspondant du bloc 12 à coder, selon un certain critère. Il s'agit donc d'une prédiction du bloc 12 actuel en fonction du bloc 15 précédent, qui peut notamment être une prédiction dans le sens du mouvement, plus connue sous le nom de "block matching" (reconnaissance bloc à bloc).

On calcule ensuite la différence 16 entre le bloc 12 à transmettre et la valeur estimée de ce bloc.

Une étape 18 de choix entre le bloc spatial 12 et la différence 16 (ou bloc temporel) sélectionne a priori le bloc contenant l'énergie la plus faible. L'indication du choix 19 est transmise au décodeur, ainsi que les éventuels vecteurs de mouvement associés aux blocs. Il est clair que, si le critère de prédiction de l'étape 13 est efficace, la différence 16 contient peu d'informations. Il est donc plus économique, en terme de débit, de ne transmettre que cette différence 16. Toutefois, dans certains cas, le bloc spatial 12 contient moins d'informations à transmettre que le bloc temporel 16, notamment lors des transitions.

Le bloc sélectionné 20 subit ensuite une transformation mathématique réversible 21. Cette transformation 21 est, dans le mode de réalisation préférentiel décrit, une transformation discrète en cosinus. On peut également utiliser de nombreuses autres transformées, telles que notamment mais non exclusivement les transformées de Hadamard, de Haar ou de Fourier. Les coefficients 22 de la matrice transformée sont ensuite quantifiées (étape 23).

Cette transformation 21 fournit une matrice de coefficients correspondant à des structures d'image de fréquences variables. Ainsi, le premier coefficient correspond à une structure de bloc uniforme. Il a une valeur égale à la valeur moyenne du bloc avant transformation.

Les coefficients de la première ligne correspondent à des fréquences spatiales horizontales croissantes, et ceux de la première colonne à des fréquences spatiales verticales croissantes. Le dernier coefficient de cette matrice correspond à un damier de 64 cases.

On sait que la sensibilité de l'oeil humain décroît lorsque la fréquence spatiale des structures s'accroît. D'autre part, les petits écrans ayant une résolution spatiale limitée, la transmission et l'utilisation par ces récepteurs des informations concernant les structures spatiales d'ordre élevé est sans intérêt. Il est également connu que l'énergie des coefficients diminue très rapidement avec leur fréquence spatiale, notamment du fait des images traitées. Ainsi, il y a rarement des petits damiers dans la nature.

Il apparaît donc très avantageux de séparer les coefficients à transmettre en deux trains binaires b1 et b2, et de traiter distinctement ces deux trains. Le train binaire b1 contiendra les valeurs des éléments correspondants aux structures de plus basses fréquences, jusqu'aux coefficients d'ordre 1 déterminé par le débit du train binaire b1, et le train binaire b2 les éléments d'ordre 1+1 à m.

Ainsi, deux types de récepteurs peuvent être définis : des récepteurs simples, de petites dimensions, utilisant seulement une partie de l'information transmise, correspondant au train numérique b1, avec un niveau de protection élevé, permettant de recevoir dans des conditions difficiles, et notamment dans les mobiles, et des récepteurs plus sophistiqués, utilisant l'ensemble des données utiles du canal, c'est-à-dire les deux trains binaires b1 et b2.

Les données du second train binaire b2 contiennent des informations de moindre importance, en terme d'analyse psychovisuelle. Elles peuvent donc être transmises avec un niveau de protection plus faible que celui utilisé pour le train b1, sans que cela nuise de façon importante à la réception. Il est ainsi possible d'augmenter globalement le débit de transmission, sans détériorer la qualité de la transmission des informations essentielles (train b1).

Cette séparation en deux trains binaires permet également de définir de nouveaux moyens de stockge d'images, notamment du type magnétoscope ou disque optique, à deux niveaux de qualité. En effet, selon le niveau de qualité requis, il est possible de mémoriser soit le seul premier train binaire b1, soit les deux trains binaires b1 et b2, au prix d'une consommation d'espace mémoire supérieure. En d'autres termes, des images dont la qualité n'a que peu d'importance pourront être stockées en ne conservant que l'information essentielle du train binaire b1, réduisant ainsi la place occupée sur le support, alors que les images de haute qualité seront mémorisées de façon complète.

Des moyens de sélection du type d'enregistrement souhaité (qualité standard ou haute qualité) permettront à l'utilisateur de préciser son choix.

Il est bien évidemment possible de séparer de la même façon les informations à transmettre en plus de deux trains binaires, correspondant à autant de niveaux de qualité, et donc de types de récepteurs.

Pour cela, il est nécessaire de réaliser un tri des coefficients, selon leur caractère d'importance. Dans l'exemple décrit, on réalise un changement de balayage 24 de lecture des coefficients, de façon à les ordonner selon un critère psychovisuel de fréquences spatiales horizontales, verticales ou diagonales croissantes.

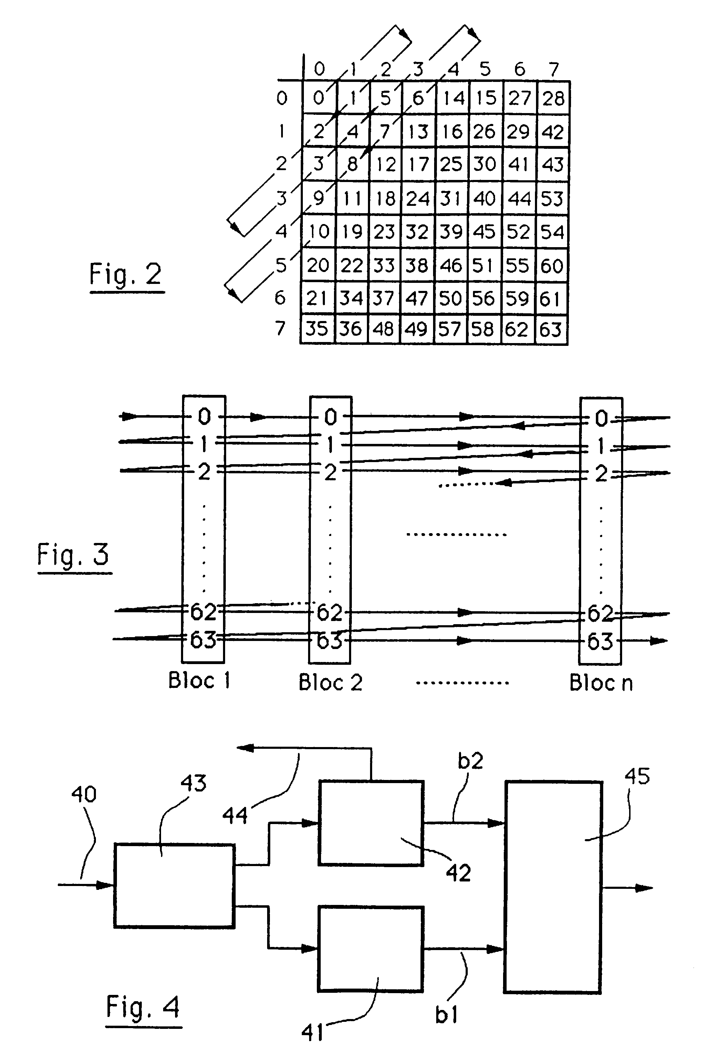

La figure 2 illustre le mode de balayage "zigzag" utilisé, connu en soi. A chaque élément est attribué un numéro d'ordre (rang), correspondant à l'ordre dans lesquels les coefficients seront codés. Cet ordre représente donc l'ordre d'importance des coefficients, selon le critère psychovisuel lié à la fréquence spatiale dans le bloc.

L'ensemble des éléments de même rang dans l'ensemble des blocs de chaque image va être codé avant les éléments de rang supérieur. On entend par "rang" et "ordre" le numéro d'ordre attribué à chaque coefficient successivement pris en compte dans le balayage zigzag (vois Fig.2). Plus précisément, chaque bloc après transformation DCT est lu dans l'ordre défini par le balayage 24 et chaque élément du bloc est stocké dans une mémoire spécifique au rang de l'élément dans le bloc. Lorsque l'ensemble des blocs de l'image est décrit, les mémoires sont relues dans l'ordre de rang croissant. Ainsi que cela est illustré en figure 3, on commence donc par coder l'ensemble des coefficients d'ordre 0 pour les n blocs constituant l'image, puis ceux d'ordre 1, et ainsi de suite. Cela permet de coder pour chaque image d'abord l'ensemble du premier train binaire b1, puis ensuite le second train binaire b2.

L'étape 25 de codage attribue à chaque coefficient quantifié, un mot de code qui peut avantageusement être un code à longueur variable, et par exemple un code de Huffman.

On réalise ensuite la séparation 26 des deux trains binaires b1 et b2 dont le principe est expliqué plus loin en liaison avec la figure 4. Les deux trains binaires sont ensuite multiplexés, par un multiplexeur 34, puis émis.

Le procédé peut comprendre une étape 29 de régulation, consistant à modifier les éléments du codage et la quantification en particulier, de façon à ce que le tampon 28 ne déborde ni ne se vide. Le bloc de régulation fournit également à la quantification un facteur de régulation qui est transmis au décodeur. Cette régulation ne tient compte que des éléments du train binaire b2. Ainsi, cette régulation n'influe que sur les coefficients de faible importance. Les coefficients essentiels du train binaire b1 ne sont jamais sous-codés.

Pour réaliser la compensation de mouvement, il est nécessaire d'opérer une reconstruction d'image identique à celle qui sera faite dans les décodeurs, de façon à ce que l'on ait, en mémoire 14, des blocs d'images identiques à ceux utilisés par les décodeurs.

Cette reconstruction comprend donc les étapes de décodage 30, de changement de balayage inverse 31, et quantification inverse 32 et de transformation inverse 33.

Cette reconstruction se fait uniquement à partir du train binaire b1, car c'est la seule information disponible dans les deux types de décodeurs.

Le traitement décrit ci-dessus s'applique à une seule composante d'un signal vidéo, telle que le signal de luminance. Avantageusement, le procédé peut comprendre plusieurs chaînes identiques, agissant chacune en parallèle sur une composante du signal. Ainsi, l'on peut utiliser de telles chaînes pour chacun des signaux de chrominance. Il est également envisageable de séparer en deux trains binaires le signal de son.

La figure 4 présente le principe de séparation des deux trains binaires b1 et b2. Les coefficients 40, transformés et codés, sont orientés vers l'une des deux mémoires-tampon 41 et 42, correspondant à chacun des trains binaires b1 et b2, par un module 43 de calcul du débit associé au train b1. Lorsque le débit alloué à ce train binaire b1 est atteint, la suite des données est écrite dans le second tampon 42. Le taux de remplissage 44 de ce tampon 42 pilote le module de régulation 29 de la figure 1.

Les données correspondant aux deux trains binaires sont ensuite relues de façon synchrone, au rythme du canal, et multiplexés (45).

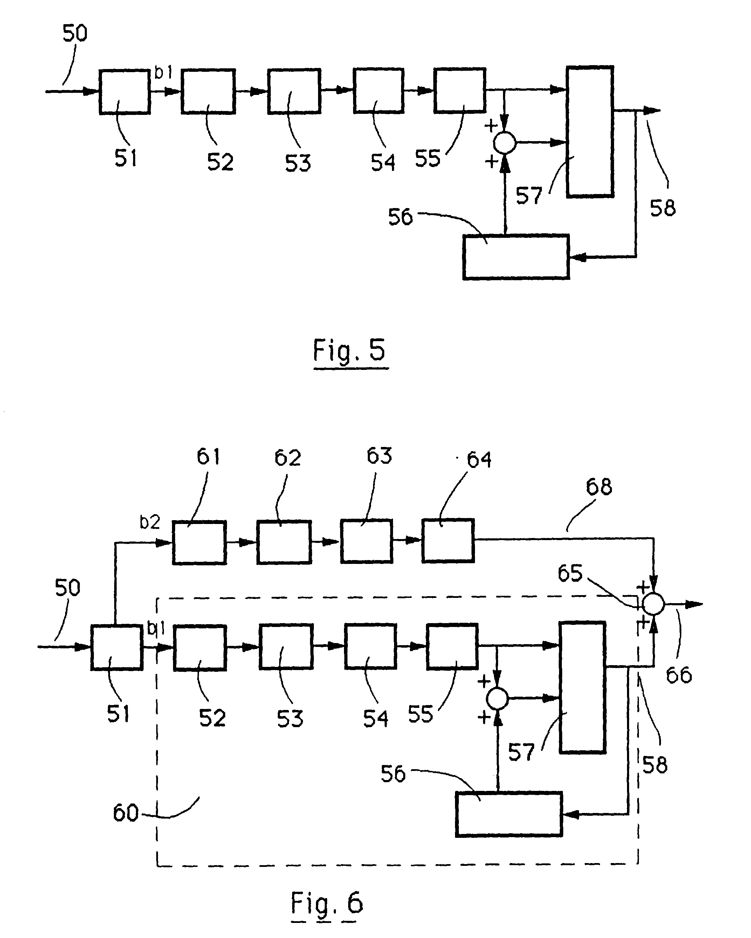

La figure 5 est le schéma d'un décodeur simple. Il trouve notamment des applications dans les récepteurs mobiles et les récepteurs de petite taille. Ce type de décodeur n'utilise que l'information du train binaire b1.

Il comprend donc un démultiplexeur 51, qui extrait du signal transmis 50, le train binaire b1, ainsi que les données d'assistance nécessaires à la reconstruction de l'image, telles que les indications de choix et les vecteurs de mouvement.

Le train binaire b1 est successivement soumis aux modules de décodage 52, de changement de balayage inverse 53, de façon à redisposer les coefficients en blocs, de quantification inverse 54 et de transformation inverse 55. Les valeurs reconstruites 58 sont mises en mémoire 56, pour utilisation lors de la compensation de mouvement, après avoir éventuellement ajouté, dans le module 57 de choix, le bloc déplacé de l'image précédente.

La figure 6 présente le schéma de principe d'un décodeur complet, utilisant les deux trains binaires b1 et b2. Un tel décodeur correspond notamment à des récepteurs pour applications domestiques, dans de meilleures conditions de réception et/ou avec des écrans plus grands.

Le sous-ensemble 60 réalise le traitement du premier train binaire b1 de façon identique au traitement réalisé dans un décodeur simple, ainsi que cela a été décrit en liaison avec la figure 6. On notera en particulier que la compensation de mouvement est réalisée à partir des seules données reconstruites à partir du train b1.

Le démultiplexeur 51 extrait également du signal reçu 50 le train binaire b2, qui subit un traitement analogue : décodage 61, changement de balayage inverse 62, quantification inverse 63 et transformation discrète en cosinus 64. Le train binaire b2 après décodage et transformation DCT inverse lui permet de recouvrir une information complémentaire qui, ajoutée à l'information correspondant au train binaire b1, permet d'obtenir une image de meilleure qualité.

Les données 58 et 68 issues des deux trains sont sommées dans un sommateur 65, fournissant un signal vidéo 66 tenant compte de l'ensemble de l'information transmise.

Dans le cas où le procédé de codage comprend plusieurs chaînes de traitement fonctionnant en parallèle sur plusieurs composantes du signal à transmettre, les décodeurs comprennent évidemment le même nombre de chaînes de décodage.

Par ailleurs, il est possible d'envisager la réalisation de récepteurs effectuant automatiquement la sélection des trains binaires à utiliser, par exemple en fonction de critères tels que la vitesse de déplacement ou le taux d'erreur à la réception. Ainsi, dans un même récepteur, il serait possible de recevoir d'une part, lorsque les conditions le permettent, une image de haute qualité, et d'autre part, dans des conditions plus difficiles, une image de qualité plus faible, mais non perturbée.

Les deux trains binaires b1 et b2, dans un mode de réalisation particulier, peuvent être multiplexés dans un canal commun. Des mots binaires spécifiques, ou mots de synchronisation, sont transmis afin d'indiquer au décodeur les début et fin des trains binaires b1 et b2.

Une autre technique avantageuse est d'utiliser un codage COFDM (Coding Orthogonal Frequency Division Multiplex (Multiplexage de Fréquences Orthogonales Codées)) tel que décrit dans les demandes de brevets françaises 86 09622 du 2 juillet 1986, et 86 13271 du 23 septembre 1986 au nom des mêmes déposants. Une application avantageuse du codage COFDM compatible avec la présente invention est également décrite dans une demande de brevet conjointe de même date de dépôt au nom des mêmes déposants.

Ce système de diffusion numérique est basé sur l'utilisation conjointe d'un dispositif de codage de canal et d'un procédé de modulation par multiplexage de fréquences orthogonales.

Le procédé de modulation proprement dit de ce système connu permet de s'affranchir des problèmes liés à la sélectivité en fréquence du canal. Il consiste à assurer la répartition d'éléments numériques constitutifs du signal de données dans l'espace fréquence f- temps t et à émettre simultanément des jeux d'éléments numériques sur J voies de diffusion parallèles au moyen d'un multiplex de fréquences utilisant des porteuses orthogonales. En particulier, ce type de modulation permet d'éviter que deux éléments successifs du train de données soient émis à la même fréquence.

Le processus de codage connu vise dans son ensemble à permettre le traitement des échantillons issus du démodulateur pour absorber l'effet des variations d'amplitude du signal reçu, dues au processus de Rayleigh. Le codage est avantageusement un codage convolutif, éventuellement concaténé à un codage du type Reed-Solomon. Le décodage peut être avantageusement un décodage de Viterbi à décision douce.

De façon connue, les éléments numériques codés sont de plus entrelacés, en temps et en fréquence, de façon à maximiser l'indépendance statistique des échantillons vis-à-vis du processus de Rayleigh et du caractère sélectif du canal.

Ce système permet donc la diffusion de signaux numériques dans des canaux affectés de trajets multiples dont les caractéristiques varient dans le temps. Notamment, il permet de recevoir dans de bonnes conditions des données numériques dans des mobiles en milieu urbain.

Dans ce cas, il est possible d'attribuer un jeu de fréquences-porteuses particulier à chacun des trains binaires b1 et b2. Ainsi, les décodeurs simples disposent de moyens de décoder les fréquences-porteuses du seul jeu correspondant au premier train binaire b1. En revanche, les décodeurs complets décodent l'ensemble des J fréquences-porteuses.

Avantageusement, les fréquences-porteuses du premier jeu correspondant au train binaire b1 sont codées de façon plus robustes que celles du deuxième jeu correspondant au second train binaire b2. Par exemple, les porteuses du premier jeu pourront être modulées selon une modulation de phase à deux états, alors que les porteuses du second jeu, quine seront reçues que par des récepteurs fixes, donc des conditions de réception plus faciles, seront modulées selon une modulation a quatre ou huit états. Ces dernières porteuses peuvent ainsi porter beaucoup plus d'informations. En revanche, leur codage de canal s'avèrera moins robuste.

A titre d'exemple, un tel procédé peut permettre d'émettre le train binaire b1 à un débit compris entre 2,5 et 5 Mbits/s, et le second train binaire b2 à un débit de 5 Mbits/s. De tels débits permettent de transmettre des images selon la norme 4 : 2 : 2, c'est-à-dire avec une résolution de 720 points x 625 lignes, à un rythme de 25 images par seconde.

## Revendications

1. Procédé de codage et de transmission d'images numériques, à au moins deux niveaux de qualité, chaque image numérique étant constituée d'au moins une matrice d'éléments d'image codés,
caractérisé en ce qu'il comprend un codage source unique comprenant les étapes suivantes :
découpage (11) de chacune desdites images (10) en blocs (12) d'éléments d'image,
transformation mathématique réversible (21) appliquée à chacun desdits blocs (12) d'éléments d'image, délivrant des coefficients transformés (22) représentatifs chacun d'une fréquence spatiale donnée dans ledit bloc (12) d'éléments d'images, quantification (23) des coefficients transformés (22) et
codage (25) des coefficients quantifiés, délivrant des coefficients codés,
en ce que lesdits coefficients codés sont répartis (26) en au moins deux trains numériques (b1,b2),
le premier train numérique (b1) comprenant des coefficients de base, correspondant aux fréquences spatiales basses et permettant de reconstruire une image de qualité standard,
et au moins un second train numérique (b2) comprenant un jeu de coefficients complémentaires, correspondant aux fréquences spatiales élevées,
et en ce que lesdits trains numériques (b1,b2) sont transmis et/ou stockés de façon indépendante,
de façon que l'on puisse définir au moins deux types de décodeurs,
un premier type prenant en compte uniquement ledit premier train numérique (b1) pour alimenter une chaîne de décodage source unique, permettant de reconstruire des images de qualité standard basée sur les fréquences spatiales basses, et
un second type prenant en compte ledit premier train numérique (b1) et au moins un second train numérique (b2), lesdits premier et second trains numériques étant directement concaténés pour alimenter une chaîne de décodage source unique, permettant de reconstruire des images de haute qualité basée sur l'ensemble des fréquences spatiales,
lesdites chaînes de décodage source unique assurant, de façon identique pour les deux types, les opérations symétriques dudit codage source unique.

2. Procédé selon la revendication 1, caractérisé en ce que lesdits coefficients de base du premier train numérique (b1) sont transmis avec un niveau de protection vis à vis des erreurs de transmission supérieur à celui utilisé pour lesdits coefficients complémentaires du ou des seconds trains binaires (b2).

3. Procédé selon l'une quelconque des revendications 1 ou 2, caractérisé en ce que ladite transformation mathématique réversible (21) est du type fournissant des coefficients transformés représentatifs chacun d'une structure et d'une valeur de fréquence spatiale dans l'image, et en ce que ledit premier train numérique (b1) comprend essentiellement un premier jeu de coefficients transformés correspondant aux fréquences spatiales faibles, et en ce que ledit second train numérique (b2) comprend un jeu de coefficients transformés complémentaires correspondant aux fréquences spatiales élevées.

4. Procédé selon l'une quelconque des revendications 1 à 3, caractérisé en ce que ladite transformation mathématique réversible (21) est une transformation discrète en cosinus.

5. Procédé selon l'une quelconque des revendications 1 à 4, caractérisé en ce que lesdits coefficients de chaque bloc sont réordonnés selon un balayage "zigzag" (24) dudit bloc transformé, de façon à ordonner lesdits coefficients selon un critère de fréquence spatiale croissante.

6. Procédé selon l'une quelconque des revendications 1 à 5, caractérisé en ce que chacun desdits trains numériques (b1,b2) correspond à un débit prédéterminé.

7. Procédé selon l'une quelconque des revendications 1 à 6, caractérisé en ce que l'on code les coefficients de même ordre de l'ensemble des blocs d'une image, avant de coder les coefficients d'ordre supérieur.

8. Procédé selon l'une quelconque des revendications 1 à 7, du type réalisant une estimation (16) et une compensation de mouvement, caractérisé en ce que lesdites estimation (16) et compensation de mouvement sont réalisées à partir des coefficients du premier train numérique (b1) seulement, sans tenir compte des coefficients du ou des trains numériques (b2) complémentaires.

9. Procédé selon l'une quelconque des revendications 1 à 8, caractérisé en ce que lesdits trains numériques (b1,b2) sont multiplexés dans un canal commun, des mots de synchronisation spécifiques permettant aux décodeurs de repérer le début et la fin de chacun desdits trains numériques.

10. Procédé selon l'une quelconque des revendications 1 à 8, caractérisé en ce qu'il assure la répartition des données à diffuser sous forme d'éléments numériques dans l'espace temps-fréquence et l'émission de symboles constitués chacun d'un multiplex de J fréquences porteuses orthogonales modulées par un jeu desdits éléments numériques, et diffusées simultanément,
et en ce qu'un jeu desdites fréquences porteuses est attribué à la diffusion de chacun desdits trains numériques (b1,b2), et en ce que les fréquences porteuses de chacun desdits jeux sont modulées de façons différentes.

11. Dispositif d'émission d'images numériques codées avec au moins deux niveaux de qualité, caractérisé en ce qu'il comprend des moyens pour effectuer un codage source unique comprenant :
des moyens de découpage (11) de chacune desdites images (10) en blocs (12) d'éléments d'image,
des moyens de transformation mathématique réversible (21) appliquée à chacun desdits blocs (12) d'éléments d'image, délivrant des coefficients transformés (22) représentatifs chaque d'une fréquence spatiale donnée dans ledit bloc (12) d'éléments d'images,
des moyens de quantification (23) des coefficients transformés (22), délivrant des coefficients quantifiés,
des moyens de codage (25) des coefficients quantifiés, délivrant des coefficients codés,
des moyens de répartition (26) desdits coefficients codés en deux trains numériques (bl,b2), comprenant deux mémoires-tampon (41,42), la première mémoire-tampon (41) contenant les données correspondant audit premier train numérique (bl), et la seconde mémoire-tampon (42) contenant les données correspondant audit second train numérique (b2), le chargement de ladite seconde mémoire-tampon (42) étant effectué lorsque le débit alloué au premier train numérique (b1) est atteint,
et des moyens de transmission desdits trains numériques (b1,b2)
de façon que l'on puisse définir au moins deux types de décodeurs,
un premier type prenant en compte uniquement ledit premier train numérique (b1) pour alimenter une chaîne de décodage source unique, permettant de reconstruire des images de qualité standard basée sur les fréquences spatiales basses, et
un second type prenant en compte ledit premier train numérique (b1) et au moins un second train numérique (b2), lesdits premier et second trains numériques étant directement concaténés pour alimenter une chaîne de décodage source unique, permettant de reconstruire des images de haute qualité basée sur l'ensemble des fréquences spatiales,
lesdites chaînes de décodage source unique assurant, de façon identique pour les deux types, les opérations symétriques dudit codage source unique.

12. Dispositif d'émission selon le procédé de la revendication 11, du type appliqué à la diffusion d'images comprenant une composante de luminance et au moins une composante de chrominance, caractérisé en ce qu'il comprend au moins deux chaînes de traitement comprenant lesdits moyens de transformation, de quantification et de séparation des coefficients des blocs transformés en au moins deux trains numériques, fonctionnant en parallèle, chacune desdites chaînes étant associée à une desdites composantes.

13. Dispositif de réception d'images numériques transmises selon un procédé à deux niveaux de qualité, notamment du type récepteur pour mobiles ou récepteur de petite taille, caractérisé en ce qu'il comprend :
des moyens de réception d'un signal (50) comprenant deux trains numériques (b1, b2) transmis de façon indépendante, le premier train numérique (b1) comprenant des coefficients de base, correspondant aux fréquances spatiales basses et permettant de reconstruire une image de qualité standard, et le second train numérique (b2) comprenant un jeu de coefficients complémentaires,
correspondant aux fréquences spatiales élevées,
des moyens de démultiplexage (51) extrayant dudit signal (50) ledit premier train numérique (b1), et délivrant des coefficients codés,
des moyens de quantification inverse (59) desdits coefficients codés, délivrant des coefficients quantifiés,
des moyens de transformation mathématique inverse (55) desdits coefficients quantifiés, et
des moyens de reconstruction d'images de qualité standard, par regroupement des blocs d'éléments d'image correspondant.

14. Dispositif de réception d'images numériques transmises selon un procédé à deux niveaux de qualité, notamment du type récepteur fixe, caractérisé en ce qu'il comprend :
des moyens de réception d'un signal (50) comprenant deux trains numériques (b1, b2) transmis de façon indépendante, le premier train numérique (b1) comprenant des coefficients de base, correspondant aux fréquances spatiales basses et permettant de reconstruire une image de qualité standard, et le second train numérique (b2) comprenant un jeu de coefficients complémentaires, correspondant aux fréquences spatiales élevées,
des moyens de démultiplexage (51) extrayant dudit signal (50) ledit premier train numérique (b1), délivrant des coefficients codés, et ledit second train numérique (b2),
pour chacun desdits trains numériques (b1, b2) :
- des moyens de décodage (52, 61) délivrant des coefficients codés ;
- des moyens de quantification inverse (54, 63) desdits coefficients codés, délivrant des coefficients quantifiés ;
- des moyens de transformation mathématique inverse (55, 64) délivrant des coefficients transformés (58, 68)
des moyens de concaténation (65) des coefficients transformés (58, 68) permettant de reconstruire des images de haute qualité.

15. Dispositif de stockage à au moins deux niveaux de qualité d'images numériques codés selon un procédé consistant à :
découper (11) chacune desdites images (10) en blocs (12) d'éléments d'image, appliquer une transformation mathématique réversible (21) à chacun desdits blocs (12) d'éléments d'image, pour délivrer des coefficients transformés (22) représentatifs chacun d'une fréquence spatiale donnée dans ledit bloc (12) d'éléments d'images,
quantificatier (23) les coefficients transformés (22) et
coder (25) les coefficients quantifiés, pour délivrer des coefficients codés, et répartir lesdits coefficients codés (26) en au moins deux trains numériques (b1,b2), le premier train numérique (b1) comprenant des coefficients de base, correspondant aux fréquences spatiales basses et permettant de reconstruire une image de qualité standard, et au moins un second train numérique (b2) comprenant un jeu de coefficients complémentaires, correspondant aux fréquences spatiales élevées,
caractérisé en ce qu'il comprend des moyens de sélection entre deux formats d'inscription, un format standard et un format haute qualité, et des moyens d'inscription enregistrant ledit premier train numérique (b1) si le format standard est sélectionné, et lesdits premier et second trains numériques (b1, b2) si le format haute qualité est sélectionné.

## Patentansprüche

1. Verfahren zur Kodierung und Übertragung von digitalen Bildern mit mindestens zwei Qualitätsniveaus, wobei jedes digitale Bild aus mindestens einer Matrix kodierter Bildelemente besteht,
dadurch gekennzeichnet, daß es eine Einzelquellkodierung enthält, welche die folgenden Schritte umfaßt:
Zerschneiden (11) eines jeden Bildes (10) in Bildelementblöcke (12),
auf jeden der Bildblöcke (12) angewandte umkehrbare mathematische Transformation (21), die transformierte Koeffizienten (22) liefert. welche jeweils repräsentativ für eine in dem Bildelementblock (12) gegebene Raumfrequenz sind,
Quantifizierung (25) der transformierten Koeffizienten und Kodierung der quantifizierten Koeffizienten, wobei kodierte Koeffizienten erzeugt werden,
dadurch, daß die kodierten Koeffizienten (26) mindestens in zwei digitale Folgen (b1, b2) verteilt sind,
wobei die erste digitale Folge (b1) Grundkoeffizienten umfaßt, die den tiefen Raumfrequenzen entsprechen und die Wiederherstellung eines Bildes von Standardqualität ermöglichen,
sowie mindestens eine digitale Folge (b2), welche einen Satz komplementärer Koeffizienten umfaßt, die den hohen Raumfrequenzen entsprechen, und
wobei die digitalen Folgen (b1, b2) unabhängig gesendet und/oder gespeichert werden, so daß man mindestens zwei Arten von Decodern definieren kann.
eine erste Art, die nur die erste digitale Folge (b1) berücksichtigt, um eine einzige Einzelquelldekodierkette zu speisen, die das Wiederherstellen von Standardqualitätsbildern ermöglicht, die auf den tiefen Raumfrequenzen basieren und
eine zweite Art, welche die erste digitale Folge (b1) und mindestens eine zweite digitale Folge (b2) berücksichtigt, wobei die erste und die zweite Folge direkt verkettet sind, um eine Einzelquelldekodierkette zu speisen, die das Wiederherstellen hochqualitativer Bilder ermöglichen, die sich auf die Gesamtmenge der Raumfrequenzen stützen,
wobei die Einzelquelldekodierketten in identischer Weise für beide Typen die symmetrischen Vorgänge der Einzelquellkodierung sicherstellen.

2. Verfahren gemäß Anspruch 1, dadurch gekennzeichnet, daß die Grundkoeffizienten der ersten digitalen Folge (b1) mit einem Schutzniveau bezüglich der Übertragungsfehler gesendet werden, das höher ist als dasjenige für die komplementären Koeffizienten der Binärfolge oder der Binärfolgen (b2).

3. Verfahren gemäß Anspruch 1 oder 2, dadurch gekennzeichnet, daß die umkehrbare mathematische Transformation (21) von der Art ist, die Transformiertenkoeffizienten liefert, die jeweils für eine Struktur und einen Raumfrequenzwert im Bilde repräsentativ sind und daß die erste digitale Folge (b1) im wesentlichen einen ersten Satz transformierter Koeffizienten umfaßt, die den schwachen Raumfrequenzen entspricht und, daß die zweite digitale Folge (b2) einen Satz komplementärer transformierter Koeffizienten umfaßt, der den hohen Raumfrequenzen entspricht.

4. Verfahren gemäß einem der Ansprüche 1 bis 3, dadurch gekennzeichnet, daß die umkehrbare mathematische Transformation (21) eine diskrete Kosinustransformation ist.

5. Verfahren gemäß einem der Ansprüche 1 bis 4, dadurch gekennzeichnet, daß die Koeffizienten eines jeden Blocks gemäß einer "Zickzack"-Rasterung (24) des transformierten Blocks nach einem zunehmenden Raumfrequenzkriterium neugeordnet werden.

6. Verfahren gemäß einem der Ansprüche 1 bis 5, dadurch gekennzeichnet, daß jede der digitalen Folgen (b1, b2) einem im voraus definierten Bereich entspricht.

7. Verfahren gemäß einem der Ansprüche 1 bis 6, dadurch gekennzeichnet, daß die Koeffizienten gleicher Ordnung aus der Gesamtheit der Blöcke eines Bildes kodiert werden, ehe die Koeffizienten höherer Ordnung kodiert werden.

8. Verfahren gemäß einem der Ansprüche 1 bis 7, bei dem eine Abschätzung (16) und eine Bewegungskompensierung durchgeführt wird, dadurch gekennzeichnet, daß die Abschätzung (16) und die Bewegungskompensierung nur ausgehend von den Koeffizienten der ersten digitalen Folge (b1) erfolgen, ohne die Koeffizienten der komplementären digitalen Folge(n) (b2) zu berücksichtigen.

9. Verfahren gemäß einem der Ansprüche 1 bis 8, dadurch gekennzeichnet, daß die digitalen Folgen (b1, b2) in einem gemeinsamen Kanal multiplexiert werden, wobei spezifische Synchronisierungswörter es den Decodern erlauben, den Anfang und das Ende einer jeden digitalen Folge zu erfassen.

10. Verfahren gemäß einem der Ansprüche 1 bis 8, dadurch gekennzeichnet, daß es die Verteilung der zu übertragenden Daten in der Form digitaler Elemente im Zeit-Frequenz-Raum sowie die Übertragung von Symbolen, die jeweils aus einem Multiplex von J orthogonalen Trägerfrequenzen sicherstellt, die durch einen Satz dieser digitalen Elemente moduliert sind und gleichzeitig gesendet werden und daß der Satz Trägerfrequenzen der Übertragung der digitalen Folgen (b1, b2) zugeordnet wird und daß die Trägerfrequenzen jedes Satzes unterschiedlich moduliert sind.

11. Vorrichtung zum Senden kodierter Digitalbilder mit mindestens zwei Qualitätsebenen, dadurch gekennzeichnet, daß es über Mittel zum Ausführen einer Einzelquellkodierung verfügt, die folgendes umfassen:
Mittel (11) um jedes Bild (10) in Blöcke (12) von Bildelementen zu zerlegen,
Mittel (21) für die umkehrbare mathematische Transformation, die auf jeden der Bildelementblöcke (12) angewandt werden und transformierte Koeffizienten (22) liefern, die jeweils repräsentativ für eine in dem Bildelementblock (12) gegebene Raumfrequenz sind,
Quantifizierungsmittel (23) für die transformierten Koeffizienten (22), welche quantifizierte Koeffizienten liefern,
Mittel (25) zum Kodieren der quantifizierten Koeffizienten, welche kodierte Koeffizienten liefern,
Mittel (26) zum Verteilen der kodierten Koeffizienten auf zwei digitale Folgen (b1, b2), die zwei Pufferspeicher (41, 42) umfassen, wobei der erste Pufferspeicher (41) die Daten enthält, die der ersten digitalen Folge (b1) entsprechen und der zweite Pufferspeicher (42) die Daten enthält, die der zweiten digitalen Folge (b2) entsprechen, wobei das Laden des zweiten Pufferspeichers (42) dann erfolgt, wenn der Durchsatz erreicht wird, welcher der ersten Folge (b1) zugeordnet ist,
sowie Mittel zum Senden der digitalen Folgen (b1, b2),
so daß mindestens zwei Arten von Decodern definierbar sind:
eine erste Art, die nur die erste digitale Folge (b1) berücksichtigt, um eine einzige Einzelquelldekodierkette zu speisen, die das Wiederherstellen von Standardqualitätsbildern ermöglicht, die auf den tiefen Raumfrequenzen basieren und
eine zweite Art, welche die erste digitale Folge (b1) und mindestens eine zweite digitale Folge (b2) berücksichtigt, wobei die erste und die zweite Folge direkt verkettet sind, um eine Einzelquelldekodierkette zu speisen, die das Wiederherstellen hochqualitativer Bilder ermöglichen, die sich auf die Gesamtmenge der Raumfrequenzen stützen.
wobei die Einzelquelldekodierketten in identischer Weise für beide Typen die symmetrischen Vorgänge der Einzelquellkodierung sicherstellen.

12. Sendevorrichtung gemäß Anspruch 11, von der Art, die auf die Übertragung von Bildern angewandt wird, die eine Luminanzkomponente und mindestens eine Chrominanzkomponente umfassen, dadurch gekennzeichnet, daß sie mindestens zwei Verarbeitungsketten enthält, welche die Mittel zur Transformation, zur Quantifizierung und zum Trennen der Koeffizienten der Transformiertenblöcke in mindestens zwei digitale Folgen umfassen, die parallel zueinander funktionieren und wobei jede Kette einer der Komponenten zugeordnet ist.

13. Empfangsvorrichtung für digitale Bilder, die nach einem Verfahren mit zwei Qualitätsebenen gesendet werden, insbesondere von der Art der Empfänger für bewegliche Gegenstände oder für kleine Empfänger, dadurch gekennzeichnet, daß sie folgendes umfaßt:
Mittel zum Empfang eines Signals (50), welches mindestens zwei digitale Folgen (b1, b2) umfaßt, die unabhängig gesendet werden, wobei die erste digitale Folge (b1) Grundkoeffizienten umfaßt, die den tiefen Raumfrequenzen entsprechen und die Wiederherstellung eines Bildes von Standardqualität ermöglichen und die zweite digitale Folge (b2) einen Satz komplementärer Koeffizienten umfaßt, die den hohen Raumfrequenzen entsprechen;
Demultiplexierungsmittel welche aus dem Signal (50) die erste digitale Folge (b1) extrahieren und kodierte Koeffizienten abgeben;
Mittel (59) zur inversen Quantifizierung der kodierten Koeffizienten, die quantifizierte Koeffizienten liefern;
Mittel zur inversen mathematischen Transformation (55) der quantifizierten Koeffizienten und
Mittel zum Wiederherstellen von Bildern mit Standardqualität durch Gruppierung der entsprechenden Bildelementblöcke.

14. Empfangsvorrichtung für digitale Bilder, die nach einem Verfahren mit zwei Qualitätsebenen gesendet werden, insbesondere der Art eines festen Empfängers, dadurch gekennzeichnet, daß sie folgendes umfaßt:
Mittel zum Empfang eines Signals (50), welches mindestens zwei digitale Folgen (b1, b2) umfaßt, die unabhängig gesendet werden. wobei die erste digitale Folge (b1) Grundkoeffizienten umfaßt, die den tiefen Raumfrequenzen entsprechen und die Wiederherstellung eines Bildes von Standardqualität ermöglichen und die zweite digitale Folge (b2) einen Satz komplementärer Koeffizienten umfaßt, die den hohen Raumfrequenzen entsprechen;
Demultiplexierungsmittel (51), die aus dem Signal (50) die erste digitale Folge (b1), welche kodierte Koeffizienten liefern sowie die zweite digitale Folge (b2) extrahieren,
ferner für jede der digitalen Folgen (b1, b2):
- Mittel zum Dekodieren (52, 61), die kodierte Koeffizienten liefern;
- Mittel zur inversen Quantifizierung (54. 63) dieser kodierten Koeffizienten, die quantifizierte Koeffizienten liefern;
- Mittel zur inversen mathematischen Transformation (55, 64), die transformierte Koeffizienten liefern (58, 68);
Mittel zum Verketten (65) der transformierten Koeffizienten (58, 68), die das Wiederherstellen von Bildern hoher Qualität ermöglichen.

15. Speichervorrichtung mit mindestens zwei Qualitätsebenen digitaler kodierter Bilder nach einem Verfahren, das aus folgenden besteht:
Zerlegen (11) eines jeden Bildes (10) in Bildelementblöcke (12);
Anwenden einer umkehrbaren mathematischen Transformation (21) auf jeden der Bildelementblöcke (12), um transformierte Koeffizienten (22) zu liefern, die jeweils für eine in dem Bildelementblock (12) gegebene Raumfrequenz repräsentativ sind;
Quantifizieren (23) der transformierten Koeffizienten (22) und Kodieren (25) der quantifizierten Koeffizienten, um kodierte Koeffizienten zu liefern und die kodierten Koeffizienten (26) auf mindestens zwei digitale Folgen (b1, b2) zu verteilen, wobei die erste digitale Folge (b1) Grundkoeffizienten umfaßt, die den tiefen Raumfrequenzen entsprechen und das Wiederherstellen eines Bildes von Standardqualität ermöglichen und wobei mindestens eine zweite digitale Folge (b2) einen Satz komplementärer Koeffizienten umfaßt, die den hohen Raumfrequenzen entsprechen,
dadurch gekennzeichnet, daß sie über Auswahlmittel zwischen zwei Eintragungsformate verfügt, ein Standardformat und ein hochqualitatives Format sowie über Eintragungsmittel, welche die erste digitale Folge (b1) registrieren, wenn das Standardformat gewählt wird und die erste und zweite digitalen Folgen (b1, b2), wenn das hochqualitative Format gewählt wird.

## Claims

1. Method of encoding and transmitting digital pictures, with at least two levels of quality, each digital picture consisting of at least one matrix of encoded picture elements,
characterized in that it comprises a single source encoding comprising the following steps:
partitioning (11) of each of the said pictures (10) into blocks (12) of picture elements,
reversible mathematical transformation (21) applied to each of the said blocks (12) of picture elements, yielding transformed coefficients (22) each representative of a given spatial frequency in the said block (12) of picture elements,
quantization (23) of the transformed coefficients (22) and
encoding (25) of the quantized coefficients, yielding encoded coefficients,
in that the said encoded coefficients are split (26) into at least two digital trains (b1, b2),
the first digital train (b1) comprising basic coefficients, corresponding to the low spatial frequencies and allowing reconstruction of a picture of standard quality,
and at least one second digital train (b2) comprising a set of complementary coefficients, corresponding to the high spatial frequencies,
and in that the said digital trains (b1, b2) are transmitted and/or stored independently,
in such a way that at least two types of decoders may be defined,
a first type which takes into account only the said first digital train (b1) in order to feed a single source decoding chain, allowing reconstruction of the pictures of standard quality based on the low spatial frequencies, and
a second type which takes into account the said first digital train (b1) and at least one second digital train (b2), the said first and second digital trains being directly concatenated in order to feed a single source decoding chain, allowing reconstruction of the pictures of high quality based on all of the spatial frequencies,
the said single source decoding chains affording, in an identical manner for both types, the symmetric operations of the said single source encoding.

2. Method according to Claim 1, characterized in that the said basic coefficients of the first digital train (b1) are transmitted with a level of protection against transmission errors which is greater than that used for the said complementary coefficients of the second binary train(s) (b2).

3. Method according to either one of Claims 1 or 2, characterized in that the said reversible mathematical transformation (21) is of the type delivering transformed coefficients each representative of a structure and of a value of spatial frequency in the picture, and in that the said first digital train (b1) essentially comprises a first set of transformed coefficients corresponding to the low spatial frequencies, and in that the said second digital train (b2) comprises a set of complementary transformed coefficients corresponding to the high spatial frequencies.

4. Method according to any one of Claims 1 to 3, characterized in that the said reversible mathematical transformation (21) is a discrete cosine transformation.

5. Method according to any one of Claims 1 to 4, characterized in that the said coefficients of each block are reordered according to a "zigzag" scan (24) of the said transformed block, in such a way as to order the said coefficients according to a criterion of increasing spatial frequency.

6. Method according to any one of Claims 1 to 5, characterized in that each of the said digital trains (bl, b2) corresponds to a predetermined bit rate.

7. Method according to any one of Claims 1 to 6, characterized in that the coefficients of like order of all the blocks of a picture are encoded before encoding the coefficients of higher order.

8. Method according to any one of Claims 1 to 7, of the type carrying out estimation (16) and motion compensation, characterized in that the said estimation (16) and motion compensation are carried out on the basis of the coefficients of the first digital train (b1) alone, without regard for the coefficients of the complementary digital train(s) (b2).

9. Method according to any one of Claims 1 to 8, characterized in that the said digital trains (b1, b2) are multiplexed in a common channel, specific synchronization words enabling the decoders to tag the start and end of each of the said digital trains.

10. Method according to any one of Claims 1 to 8, characterized in that it provides for the splitting of the data to be broadcast in the form of digital elements in time/frequency space and the sending of symbols each consisting of a multiplex of J orthogonal carrier frequencies modulated by a set of the said digital elements, and broadcast simultaneously,
and in that a set of the said carrier frequencies is allocated to the broadcasting of each of the said digital trains (b1, b2), and in that the carrier frequencies of each of the said sets are modulated differently.

11. Device for sending digital pictures encoded with at least two levels of quality, characterized in that it comprises means for performing a single source encoding comprising:
means (11) for partitioning of each of the said pictures (10) into blocks (12) of picture elements,
means (21) for reversible mathematical transformation applied to each of the said blocks (12) of picture elements, yielding transformed coefficients (22) each representative of a given spatial frequency in the said block (12) of picture elements,
means (23) for quantization of the transformed coefficients (22) yielding quantized coefficients, means (25) for encoding of the quantized coefficients, yielding encoded coefficients,
means (26) for splitting the said encoded coefficients into two digital trains (b1, b2), comprising two buffer memories (41, 42), the first buffer memory (41) containing the data corresponding to the said first digital tain (b1), and the second buffer memory (42) containing the data corresponding to the said second digital train (b2), the loading of the said second buffer memory (42) being performed when the bit rate allotted to the first digital train (b1) is attained,
and means for transmitting the said digital trains (b1, b2)
in such a way that at least two types of decoders may be defined,
a first type which takes into account only the said first digital train (b1) in order to feed a single source decoding chain, allowing reconstruction of the pictures of standard quality based on the low spatial frequencies, and
a second type which takes into account the said first digital train (b1) and at least one second digital train (b2), the said first and second digital trains being directly concatenated in order to feed a single source decoding chain, allowing reconstruction of the pictures of high quality based on all of the spatial frequencies,
the said single source decoding chains affording, in an identical manner for both types, the symmetric operations of the said single source encoding.

12. Device for sending according to the method of Claim 11, of the type applied to the broadcasting of pictures comprising a luminance component and at least one chrominance component, characterized in that it comprises at least two processing chains comprising the said means for transforming, quantizing and separating the coefficients of the transformed blocks into at least two digital trains, operating in parallel, each of the said chains being associated with one of the said components.

13. Device for receiving digital pictures transmitted according to a method with two levels of quality, especially of the receiver for mobiles or small-sized receiver type, characterized in that it comprises:
means for receiving a signal (50) comprising two digital trains (b1, b2) transmitted independently, the first digital train (b1) comprising basic coefficients, corresponding to the low spatial frequencies and allowing reconstruction of a picture of standard quality, and the second digital train (b2) comprising a set of complementary coefficients, corresponding to the high spatial frequencies, demultiplexing means (51) extracting the said first digital train (b1) from the said signal (50), and yielding encoded coefficients,
means (59) of inverse quantization of the said encoded coefficients, yielding quantized coefficients,
means (55) of inverse mathematical transformation of the said quantized coefficients, and
means for reconstructing pictures of standard quality, by grouping together the corresponding picture element blocks.

14. Device for receiving digital pictures transmitted according to a method with two levels of quality, especially of the fixed receiver type, characterized in that it comprises:
means for receiving a signal (50) comprising two digital trains (b1, b2) transmitted independently, the first digital train (b1) comprising basic coefficients, corresponding to the low spatial frequencies and allowing reconstruction of a picture of standard quality, and the second digital train (b2) comprising a set of complementary coefficients, corresponding to the high spatial frequencies, demultiplexing means (51) extracting the said first digital train (b1) from the said signal (50), and yielding encoded coefficients, and the said second digital train (b2),
for each of the said digital trains (b1, b2):
- decoding means (52, 61) yielding encoded coefficients;
- means (54, 63) of inverse quantization of the said encoded coefficients, yielding quantized coefficients;
- means (55, 64) of inverse mathematical transformation yielding transformed coefficients (58, 68)
means (65) for concatenating the transformed coefficients (58, 68) allowing reconstruction of the pictures of high quality.

15. Storage device with at least two levels of quality of digital pictures encoded according to a method consisting in:
partitioning (11) each of the said pictures (10) into blocks (12) of picture elements,
applying a reversible mathematical transformation (21) to each of the said blocks (12) of picture elements, in order to yield transformed coefficients (22) each representative of a given spatial frequency in the said block (12) of picture elements,
quantizing (23) the transformed coefficients (22) and
encoding (25) the quantized coefficients, in order to yield encoded coefficients, and
splitting the said encoded coefficients (26) into at least two digital trains (b1, b2),
the first digital train (b1) comprising basic coefficients, corresponding to the low spatial frequencies and allowing reconstruction of a picture of standard quality, and at least one second digital train (b2) comprising a set of complementary coefficients, corresponding to the high spatial frequencies,
characterized in that it comprises means for selecting between two registration formats, a standard format and a high quality format, and registration means recording the said first digital train (b1) if the standard format is selected, and the said first and second digital trains (b1, b2) if the high quality format is selected.
